# NEUE EUROPÄISCHE PATENTSCHRIFT

(11) **EP 0 713 993 B2**
(45) Veröffentlichungstag und Bekanntmachung des Hinweises auf die Entscheidung über den Einspruch: **29.10.2003**
(45) Hinweis auf die Patenterteilung: 17.05.2000
(21) Anmeldenummer: 95116381.5
(22) Anmeldetag: 18.10.1995
(51) Int. Cl.: F16L 33/02

(54) **Schlauchklemme**
Hose clip
Collier de serrage

(30) Priorität: 23.11.1994 DE 4441439
(43) Veröffentlichungstag der Anmeldung: 29.05.1996
(60) Teilanmeldung: 99102502.4
(73) Patentinhaber: Firma Muhr und Bender, D-57439 Attendorn (DE)
(72) Erfinder: Möller, Rudolf, D-57439 Attendorn (DE)
(74) Vertreter: Patentanwälte Gesthuysen, von Rohr, Weidener, Häckel

(56) Entgegenhaltungen:
- EP-A- 0 545 378
- DE-A- 3 041 106
- DE-A- 3 900 190
- US-A- 4 773 129
- US-A- 4 969 240
- US-A- 4 996 749
- US-A- 5 203 809

## Beschreibung

Die Erfindung betrifft eine Schlauchklemme gemäß dem Oberbegriff des Patentanspruchs 1.

Aus der EP - A - 0 545 738 ist eine Schlauchklemme der eingangs beschriebenen Art bekannt, bei der am ersten Endbereich ein abgewinkeltes Spannende und davon beabstandet ein Rastvorsprung vorgesehen sind. Am zweiten Endbereich befindet sich ein als eine Art Brücke ausgebildetes zweites Spannende. Zur Erzielung des Aufspreizzustandes wird mit Hilfe eines Spannwerkzeuges, das jeweils an den Spannenden anzusetzen ist, die Schlauchklemme aufgespreizt. Der Aufspreizzustand ist erreicht, wenn das zweite Spannende hinter dem Rastvorsprung einrastet.

Aufgabe der Erfindung ist es, eine Schlauchklemme der eingangs beschriebenen Art, zur Verfügung zu stellen, die einfach und damit kostengünstig herstellbar ist.

Die zuvor hergeleitete und aufgezeigte Aufgabe ist bei einer Schlauchklemme der eingangs beschriebenen Art erfindungsgemäß durch den Merkmalsinhalt des Kennzeichnungsteils des Patentanspruchs 1 gelöst.

Herstellungstechnisch besonders einfach und damit kostengünstig ist es, wenn der Anschlag und der Rastvorsprung in einem Verfahrensschritt, d. h. bei einem einzigen Stanzvorgang hergestellt werden. Insbesondere dann, wenn diese beiden Elemente in einem einzigen Stanzschritt hergestellt worden sind, sind sie als aufeinander zu gerichtete Schenkel ausgebildet, zwischen denen sich lediglich ein geringer Abstand zur Aufnahme des entsprechenden Anschlageelementes des zweiten Endbereichs zum Zusammenwirken bzw. Verrasten mit diesem befindet.

Damit die zuvor beschriebene Schlauchklemme in besonders einfacher Weise aufgespreizt werden kann, weist der erste Endbereich endseitig ein sich etwa in radialer Richtung erstreckendes erstes Spannende und der zweite Endbereich ein sich ebenfalls etwa in radialer Richtung erstreckendes zweites Spannende auf. Dabei wirkt dann die äußere Seite des zweiten Spannendes zum Verrasten mit dem Rastanschlag zusammen, während die gegenüberliegende, innere Seite des zweiten Spannendes mit dem Anschlag zum Überdehnungsschutz beim Aufspreizen zusammenwirkt. Das zweite Spannende weist hierzu einen Quersteg zum jeweiligen Anschlagen des Rastvorsprungs bzw. des Anschlags auf. Außerdem ist am Quersteg - benachbart des Bereiches des Anschlags bzw. des Rastvorsprungs - eine Ausnehmung zum Eingriff eines Werkzeugs, beispielsweise eines Schraubendrehers vorgesehen, um hierdurch die Verrastung zu lösen und die Schlauchklemme in ihren Klemmzustand zu bringen.

Ein weiterer Vorteil des zwischen dem ersten Spannende und dem Rastvorsprung realisierten Anschlags besteht grundsätzlich darin, daß sich aufgrund des Abstandes des Anschlags zum ersten Spannende eine Vergrößerung der Überdeckung der Endbereiche ergibt. Hierdurch kann die auf den Schlauch aufzubringende Kraft im Überdeckungsbereich der Endbereiche erhöht werden. Insbesondere kann durch entsprechende Ausbildung und Anordnung des Anschlags eine im wesentlichen kreisförmige Kraftverteilung auf den Schlauch über die Schlauchklemme realisiert werden. Bei Versuchen ist festgestellt worden, daß der Abstand vom Anschlag zum ersten Spannende zur Erzielung der zuvor genannten im wesentlichen kreisförmigen Kraftverteilung auf den Schlauch etwa 4 bis 15 mm betragen sollte.

Nachfolgend wird die Erfindung anhand der Zeichnung näher beschrieben. Es zeigt
- Fig. 1: eine Ansicht einer erfindungsgemäßen, auf ein Schlauchende aufgeschobenen Schlauchklemme im Aufspreizzustand,
- Fig. 2: eine Ansicht der Schlauchklemme nach Fig. 1 im Klemmzustand,
- Fig. 3: eine Ansicht der Schlauchklemme nach Fig. 1 in Richtung des Pfeils III in Fig. 1, ohne Schlauchende, und
- Fig. 4: eine Ansicht der Schlauchklemme nach Fig. 2 in Richtung des Pfeils IV in Fig. 2, ohne Schlauchende.

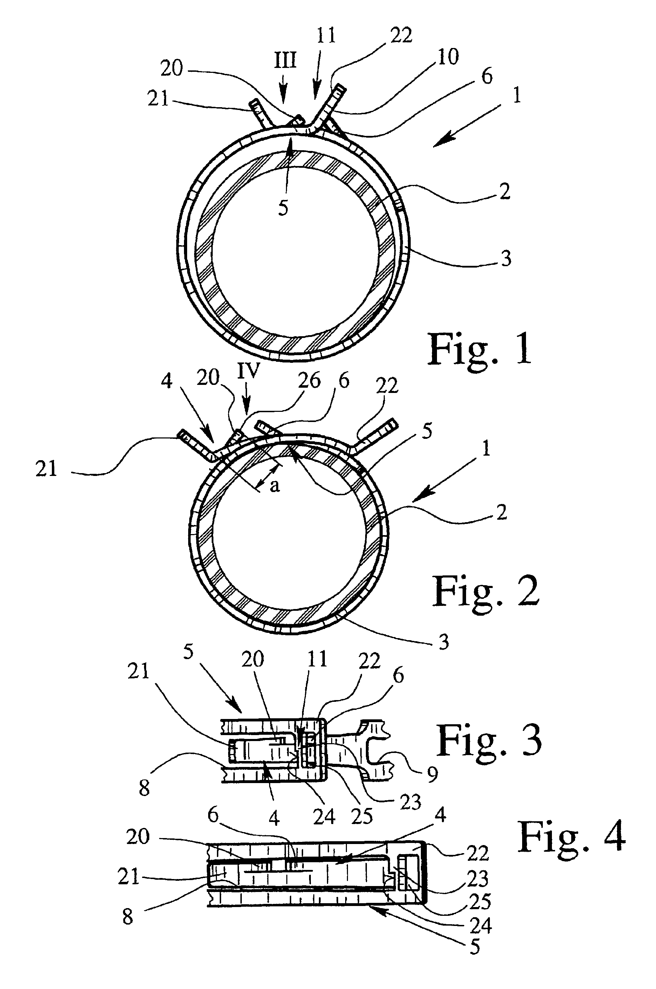

In den Fig. 1 bis 4 ist eine Ausführungsform einer Schlauchklemme 1 dargestellt, die auf ein Schlauchende 2 eines Schlauches aufgesetzt ist. Die Schlauchklemme 1 dient zur Realisierung einer Schlauch-Stutzen-Verbindung beispielsweise im Motorraum eines Kraftfahrzeuges und weist einen im wesentlichen ringförmig ausgebildeten Klemmkörper 3 auf. Der Klemmkörper 3 besteht aus einem Federstahlband und weist Endbereiche 4, 5 auf, die einander überlappen. Im geklemmten, aufgesetzten Zustand, der im folgenden stets als Klemmzustand bezeichnet wird, hat die Schlauchklemme 1 bzw. der Klemmkörper 3 einen bestimmten vorgegebenen Innendurchmesser, der kleiner gleich dem Außendurchmesser des Schlauchendes 2 ist. Dies ist in Fig. 2 dargestellt.

Der Klemmkörper 3 ist entgegen der eigenen Federkraft mit Hilfe eines nicht näher dargestellten Spannwerkzeuges, bei dem es sich um eine Zange handeln kann, auf einen zweiten größeren Innendurchmesser aufspreizbar. Dieser Zustand, der im folgenden stets als Aufspreizzustand bezeichnet wird, ist in Fig. 1 dargestellt. Im ersten Endbereich 4 ist ein Rastvorsprung 6 vorgesehen. Der Rastvorsprung 6 ist gegenüber dem vorderen Rand 7 des ersten Endbereichs 4 zurückversetzt und aus dem Material des Klemmkörpers 3 nach außen hin herausgedrückt. Zur Erzielung des Aufspreizzustandes bzw. um die Schlauchklemme 1 im Aufspreizzustand zu halten, ist der Rastvorsprung 6 mit dem anderen, dem zweiten Endbereich 5 in Eingriff bringbar.

Die beiden Endbereiche 4, 5 sind unterschiedlich ausgebildet. Der erste Endbereich 4 ist vorliegend erheblich schmaler als der zweite Endbereich 5, der eine langgestreckte Ausnehmung 8 aufweist, in der der erste Endbereich 4 aufgenommen bzw. angeordnet ist. Neben der Ausnehmung 8 kann der Klemmenkörper 3 noch weitere Ausnehmungen 9 aufweisen, die zur Erzielung bestimmter Federeigenschaften des Klemmenkörpers 3 dienen.

Der Rastvorsprung 6 des ersten Endbereichs 4 liegt im Aufspreizzustand, der in den Fig. 1 und 3 dargestellt ist, am vorderen freien Rand 10 des zweiten Endbereichs 5 an. In diesem Zustand ist die zwischen dem ersten Endbereich 4 und dem zweiten Endbereich 5 zustandegekommene Verrastung von außen für einen Monteur ohne weiteres optisch erkennbar (vgl. Fig. 3).

Neben der Möglichkeit, den eingenommenen Aufspreizzustand sofort optisch zu erkennen, ist bei der Schlauchklemme 1 zusätzlich zwischen den Endbereichen 4, 5 eine mechanische Überdehnungsschutzeinrichtung 11 vorgesehen. Diese mechanische Überdehnungsschutzeinrichtung 11 verhindert ein Aufspreizen der Schlauchklemme 1 wesentlich über den Aufspreizzustand hinaus. Vorliegend wird die Überdehnungsschutzeinrichtung 11 bereits wirksam, wenn die Schlauchklemme 1 wenige Millimeter über dem Aufspreizzustand hinaus aufgespreizt wird.

Die Überdehnungsschutzeinrichtung 11 weist einen Anschlag 20 im ersten Endbereich 4 auf, der zum Zusammenwirken mit dem zweiten Endbereich 5 dient. Der Anschlag 20 befindet sich zwischen dem äußeren vorderen Ende des ersten Endbereichs 4, also dem Spannende 21 des ersten Endbereichs 4 und dem Rastvorsprung 6.

Aus herstellungstechnischen Gründen sind der Rastvorsprung 6 und auch der Anschlag 20 randseitig am ersten Endbereich 4 vorgesehen, und zwar an einem gemeinsamen Längsrand des Klemmkörpers 3. Dies läßt sich herstellungstechnisch besonders einfach realisieren, beispielsweise beim Stanzen, und zwar durch einen einzigen Stanzschritt. Charakteristisch für die Stanzung ist dabei die aufeinander zugerichtete schenklige Ausbildung des Rastvorsprungs 6 und des Anschlages 20, wie dies insbesondere aus den Fig. 1 und 2 hervorgeht. Es darf allerdings auch darauf hingewiesen werden, daß es natürlich gleichfalls möglich ist, den Rastvorsprung 6 und den Anschlag 20 nicht zu stanzen, sondern zu prägen.

Bei der Schlauchklemme 1 ist weiterhin vorgesehen, daß die beiden Endbereiche 4, 5 endseitig mit etwa radial ausgerichteten Spannenden 21, 22 versehen sind, an denen ein Werkzeug zum Aufspreizen ohne weiteres angreifen kann. Zur Klarstellung darf darauf hingewiesen werden, daß der vordere freie oder äußere Rand 10 zum Zusammenwirken mit dem Rastvorsprung 6 vorliegend am zweiten Spannende 22 des zweiten Endbereichs 5 vorgesehen ist. Es wäre im übrigen möglich, das zweite Spannende 22 derart abzubiegen, daß es im Aufspreizzustand den Rastvorsprung 6 zumindest teilweise überdeckt.

Das zweite Spannende 22 weist einen Quersteg 23 auf, an dem außenseitig der vordere freie oder äußere Rand 10 vorgesehen ist, mit dem also außenseitig der Rastvorsprung 6 und innenseitig zum Überdehnungsschutz der Anschlag 20 zusammenwirkt. Im Quersteg 23 befindet sich vorliegend eine Ausnehmung 24, die zumindest einen Teil des ersten Endbereichs 4 überdeckt, jedoch nicht bis in den Bereich des Rastvorsprungs 6 oder des Anschlags 20 hineinragt. Außerdem ist das zweite Spannende 22 noch mit einer Eingriffsöffnung 25 zum Ansetzen eines Werkzeugs versehen. Die Eingriffsöffnung 25 befindet sich oberhalb der Ausnehmung 24.

Der Anschlag 20 hat eine Anschlagfläche 26, und der Abstand a zwischen der Anschlagfläche 26 des Anschlags 20 und dem ersten Spannende 21 beträgt zwischen 4 und 15 mm. Damit ist die Länge des ersten Endbereichs 4 dementsprechend vergrößert gegenüber einer Ausführungsform, bei der das erste Spannende selbst als Anschlag wirkt. Durch diese Verlängerung des ersten Spannendes 21 wird eine verbesserte Kraftverteilung im Klemmzustand im überlappenden Bereich erzielt, wobei die Überlappung grundsätzlich derart gewählt werden sollte, daß eine im wesentlichen gleichmäßige Kraftverteilung über den gesamten Umfang des Schlauches vorliegt.

Außerdem ist die dargestellte Schlauchklemme 1 derart ausgebildet, daß sich insbesondere im Klemmzustand ein kreisrunder Querschnitt des Klemmenkörpers 3 ergibt. Zu diesem Zweck befindet sich der Quersteg 23 im zweiten Spannende 22 in einem ausreichenden Abstand zum ersten Endbereich 4, so daß der erste Endbereich 4 nicht gegenüber dem zweiten Endbereich 5 in das Innere des Klemmkörpers 3 hineingedrückt wird. Der erste Endbereich 4 und der zweite Endbereich 5 liegen also in Umgangsrichtung etwa in einer Ebene.

Das Aufspreizen der Schlauchklemme 1 erfolgt derart, daß ein entsprechendes Werkzeug außen an den Spannenden 21, 22 angesetzt und diese aufeinanderzu gedrückt werden. Der Aufspreizzustand ist dann erreicht, wenn der Rastvorsprung 6 hinter dem Quersteg 23 einrastet. Dies ist für den jeweiligen Monteur ohne weiteres optisch erkennbar. Im übrigen ist, ohne daß ein Monteur darauf zu achten hätte, ein weiteres Aufspreizen über den Aufspreizzustand hinaus ohnehin nur wenige Millimeter möglich, da unmittelbar nach Erreichen des Aufspreizzustandes und weiterem Aufspreizen die Innenseite des Quersteges 23 am Anschlag 20 anschlägt. Ein Überdehnen und eine mögliche Beschädigung der Schlauchklemme 1 ist nicht zu befürchten.

Das Entrasten bzw. Lösen der Schlauchklemme 1 kann dadurch realisiert werden, daß beispielsweise ein Schraubendreher mit seiner Spitze in die Eingriffsöffnung 25 eingesetzt und anschließend mit dem Schaft des Schraubendrehers auf das erste Spannende 21 gedrückt wird, bis der Rastvorsprung 6 mit dem Quersteg 23 außer Eingriff kommt. Gleiches kann dadurch erreicht werden, daß das Werkzeug in der Ausnehmung 24 angesetzt und der erste Endbereich 4 nach unten gehebelt wird, bis das Entrasten erfolgt.

## Patentansprüche

1. Schlauchklemme (1) mit einem ein Schlauchende (2) im wesentlichen ringförmig umfassenden Klemmkörper (3) mit einander überlappenden Endbereichen (4, 5), wobei im geklemmten Zustand ein bestimmter erster Durchmesser vorliegt - Klemmzustand - und der Klemmkörper (3) entgegen der eigenen Federkraft mit Hilfe eines Spannwerkzeuges auf einen zweiten größeren Durchmesser aufspreizbar ist - Aufspreizzustand -, wobei die Endbereiche (4, 5) jeweils ein in radialer Richtung nach außen über den Klemmkörper (3) überstehendes Spannende (21, 22) aufweisen, im ersten Endbereich (4) ein gegenüber dem ersten Spannende (21) des ersten Endbereichs (4) zurückversetzter Rastvorsprung (6) vorgesehen ist, der zur Erzielung des Aufspreizzustandes mit dem zweiten Spannende (22) des zweiten Endbereich (5) in Eingriff bringbar ist, und im zweiten Endbereich (5) eine langgestreckte Ausnehmung (8) zur Aufnahme des entsprechend schmaleren ersten Endbereichs (4) vorgesehen ist, wobei zum Überdehnungsschutz am ersten Endbereich (4) zwischen dem ersten Spannende (21) und dem Rastvorsprung (6) ein in radialer Richtung nach außen über den Klemmkörper (3) überstehender Anschlag (20) vorgesehen ist und wobei der Anschlag (20) mit dem zweiten Endbereich (5) zusammenwirkt und ein Anschlagen der beiden Spannenden (21, 22) aneinander beim Aufspreizen verhindert, **dadurch gekennzeichnet, daß** der Rastvorsprung (6) und der Anschlag (20) gemeinsam an einem Längsrand des ersten Endbereichs (4) ausgebildet sind.

2. Schlauchklemme nach Anspruch 1, **dadurch gekennzeichnet, daß** der Rastvorsprung (6) und der Anschlag (20) als aufeinanderzu gerichtete, insbesondere in einem gemeinsamen Stanzschritt hergestellte Schenkel mit geringem Abstand ausgebildet sind.

3. Schlauchklemme nach Anspruch 1 oder 2, **dadurch gekennzeichnet, daß** der Anschlag (20) zum Überdehnungsschutz mit dem zweiten Spannende (22) zusammenwirkt.

4. Schlauchklemme nach Anspruch 3, **dadurch gekennzeichnet, daß** am zweiten Spannende (22) zum Zusammenwirken mit dem Anschlag (20) ein Quersteg (23) ausgebildet ist und im Quersteg (23) vorzugsweise eine den ersten Endbereich (4) zumindest teilweise überdeckende Ausnehmung (24) vorgesehen ist.

5. Schlauchklemme nach Anspruch 4, **dadurch gekennzeichnet, daß** der Abstand des Rastvorsprungs (6) zum Anschlag (20) geringfügig größer ist als die Dicke des Querstegs (23), vorzugsweise 2 bis 5 mm beträgt.

6. Schlauchklemme nach einem der Ansprüche 1 bis 5, **dadurch gekennzeichnet, daß** sich die Endbereiche (4, 5) im Klemmzustand derart weit überlappen, daß sich eine im wesentlichen gleichmäßige Kraftverteilung auf den Schlauch (2) ergibt und der Abstand (a) des Anschlages (20) zum ersten Spannende (21) vorzugsweise 4 bis 15 mm beträgt.

7. Schlauchklemme nach einem der Ansprüche 1 bis 6, **dadurch gekennzeichnet, daß** der Klemmkörper (3) im Aufspreiz- und/oder Klemmzustand einen im wesentlichen kreisrunden Querschnitt hat.

## Claims

1. A hose clip (1) comprising a clip body (3) which encircles a hose end (2) substantially annularly and which comprises mutually overlapping end regions (4, 5), wherein a defined first diameter exists in the clipped state - the clamping state - and the clip body (3) can be spread-apart against its inherent spring force by means of a stretching tool to a second, larger diameter - the spread-apart state, wherein the end regions (4, 5) each comprise a stretching end (21, 22) which projects radially outwards beyond the clip body (3), a locking projection (6) which is set back in relation to the first stretching end (21) of the first end region (4) is provided in the first end region (4) and can be brought into engagement with the second stretching end (22) of the second end region (5) to attain the spread-apart state, and an elongated aperture (8) is provided in the second end region (5) for receiving the correspondingly narrower first end region (4), wherein a limit stop (20) which projects radially outwards beyond the clip body (3) is provided as a protection from overstretching at the first end region (4) between the first stretching end (21) **characterised in that** the locking projection (6) and the limit stop (20) are formed jointly on a longitudinal edge of the first end region (4).

2. A hose clip according to claim 1, **characterised in that** the locking projection (6) and the limit stop (20) are formed as limbs which are directed towards each other and between which there is a slight spacing, and are produced in particular in a common punching step.

3. A hose clip according to any one of claims 1 to 2, **characterised in that** the limit stop (20) cooperates with the second stretching end (22) for protection from overstretching.

4. A hose clip according to claim 3, **characterised in that** a transverse bridge (23) is formed on the second stretching end (22) for cooperation with the limit stop (20), and an aperture (24), which preferably at least partially overlaps the first end region (4) is provided in the transverse bridge (23).

5. A hose clip according to claim 4, **characterised in that** the distance from the locking projection (6) to the limit stop (20) is slightly greater than the thickness of the transverse bridge (23), and is preferably 2 to 5 mm.

6. A hose clip according to any one of claims 1 to 5, **characterised in that** in the clamping state the end regions (4, 5) overlap to an extent such that a substantially uniform distribution of force is exerted on the hose (2) and the distance (a) from the limit stop (20) to the first stretching end (21) is preferably 4 to 15 mm.

7. A hose clip according to any one of claims 1 to 6, **characterised in that** the clip body (3) has a substantially circular cross-section in the spread-apart and/or clamping state.

## Revendications

1. Pince pour tuyaux souples (1) comprenant un corps de pincement (3) entourant de manière essentiellement circulaire une extrémité de tuyau souple (2), comprenant des zones terminales (4, 5) se chevauchant l'une l'autre, dans laquelle, à l'état pincé, on obtient un premier diamètre déterminé - état de pincement - et le corps de pincement (3) peut être écarté pour atteindre un second diamètre supérieur à l'aide d'un outil de serrage à l'encontre de la force élastique propre - état d'écartement -, dans laquelle les zones terminales (4, 5). présentent respectivement une extrémité de serrage (21, 22) faisant saillie en direction radiale vers l'extérieur par rapport au corps de pincement (3), une saillie d'encliquetage (6) étant prévue dans la première zone terminale (4) en position rétractée par rapport à la première extrémité de serrage (21) de la première zone terminale (4), qui peut être amenée en engrènement, pour atteindre l'état d'écartement, avec la seconde extrémité de serrage (22) de la seconde zone terminale (5) et un évidement (8) étiré en longueur étant prévu dans la seconde zone terminale (5) pour que vienne s'y loger la première zone terminale (4) respectivement plus étroite, une butée (20) étant prévu à des fins de protection contre l'allongement excessif, dans la première zone terminale (4), entre la première extrémité de serrage (21), **caractérisée en ce que** la saillie d'encliquetage (6) et la butée (20) sont réalisées de manière conjointe au bord longitudinal de la première zone terminale (4).

2. Pince pour tuyaux souples selon la revendication 1, **caractérisée en ce que** la saillie d'encliquetage (6) et la butée (20) sont réalisées sous la forme de branches légèrement espacées, orientées l'une vers l'autre et fabriquées en particulier dans une étape de découpe commune.

3. Pince pour tuyaux souples selon l'une quelconque des revendications 1 à 2, **caractérisée en ce que** la butée (20) coopère avec la seconde extrémité de serrage (22) à des fins de protection contre l'allongement excessif.

4. Pince pour tuyaux souples selon la revendication 3, **caractérisée en ce qu'**une nervure transversale (23) est réalisée sur la seconde extrémité de serrage (22) à des fins de coopération avec la butée (20) et on prévoit, dans la nervure transversale (23), de préférence un évidement (24) recouvrant au moins en partie la première zone terminale (4).

5. Pince pour tuyaux souples selon la revendication 4, **caractérisée en ce** la distance entre la saillie d'encliquetage (6) et la butée (20.) est légèrement supérieure à l'épaisseur de la nervure transversale (23) et s'élève de préférence de 2 à 5 mm.

6. Pince pour tuyaux souples selon l'une quelconque des revendications 1 à 5, **caractérisée en ce que** les zones terminales (4, 5) à l'état de pincement se chevauchent à ce point que l'on obtient une distribution de force essentiellement uniforme sur le tuyau souple (2), la distance (a) entre la butée (20) et la première extrémité de serrage (21) s'élevant de préférence de 4 à 15 mm.

7. Pince pour tuyaux souples selon l'une quelconque des revendications 1 à 6, **caractérisée en ce que** le corps de pincement (3) possède, à l'état d'écartement et/au à l'état de pincement, une section transversale essentiellement circulaire.
